# EUROPEAN PATENT SPECIFICATION

(11) **EP 4 637 208 B1**
(45) Date of publication and mention of the grant of the patent: **18.11.2026**
(21) Application number: 23921766.4
(22) Date of filing: 15.02.2023
(51) Int. Cl.: H04L 5/00, H04W 28/02, H04W 92/18

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 22.10.2025
(73) Proprietor: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN); ZHAO, Zhenshan, Dongguan, Guangdong 523860 (CN)
(74) Representative: Aldridge, Henry Alexander
(86) International application number: PCT/CN2023/076236
(87) International publication number: WO 2024/168603

(56) References cited:
- CN-A- 115 428 391
- US-A1- 2020 187 252
- US-A1- 2022 385 423
- SAMSUNG: "Discussion on Potential Solutions for SL Positioning", vol. RAN WG1, no. Toulouse, France; 20220822 - 20220826, 12 August 2022 (2022-08-12), XP052274768, Retrieved from the Internet <URL:https://ftp.3gpp.org/tsg_ran/WG1_RL1/TSGR1_110/Docs/R1-2206831.zip R1-2206831.docx> [retrieved on 20220812]
- SAMSUNG: "Discussion on Potential Solutions for SL Positioning", vol. RAN WG1, no. e-Meeting; 20221010 - 20221019, 30 September 2022 (2022-09-30), XP052259209, Retrieved from the Internet <URL:https://ftp.3gpp.org/tsg_ran/WG1_RL1/TSGR1_110b-e/Docs/R1-2209736.zip R1-2209736.docx> [retrieved on 20220930]
- NOKIA, NOKIA SHANGHAI BELL: "RSSI and CO Measurements in NR-U", 3GPP DRAFT; R4-2003670, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Online Meeting ;20200420 - 20200430, 10 April 2020 (2020-04-10), FR, XP051872233

## Description

### TECHNICAL FIELD

The present disclosure relates to the technical field of communication, and in particular to a communication method and a communication device.

### BACKGROUND

In some communication systems, a sidelink positioning reference signal (SL PRS) is introduced to improve the positioning accuracy of terminal device. However, it is currently unclear how to perform congestion control on the SL PRS.

Related technologies are known from SAMSUNG: "Discussion on Potential Solutions for SL Positioning", 3GPP DRAFT; R1-2206831, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Toulouse, France; 2 August 2022 (2022-08-12), XP052274768 and SAMSUNG: "Discussion on Potential Solutions for SL Positioning", 3GPP DRAFT; R1-2209736, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 30 September 2022 (2022-09-30), XP052259209.

### SUMMARY

The object of the invention is achieved by the subject-matter of the independent claims. The dependent claims describe advantageous embodiments. The scope of protection of the invention is limited by the appended claims

### BRIEF DESCRIPTION OF THE DRAWINGS

FIG. 1 is an example diagram of a wireless communication system to which an embodiment of the present disclosure is applied.
FIG. 2 is a schematic diagram of some symbols in one slot that are used for sidelink transmission.
FIG. 3 is a schematic diagram of PSCCH slot structure and PSSCH slot structure.
FIG. 4 is a schematic diagram of time domain positions of four demodulation reference signal (DMRS) symbols when the number of PSSCH symbols is 13.
FIG. 5 is a schematic diagram of a frequency domain position for a PSSCH DMRS.
FIG. 6 is a schematic diagram of PSCCH resource pool and PSSCH resource pool in NR-V2X.
FIG. 7 is a schematic diagram of a slot structure in an NR system.
FIG. 8 is a schematic diagram of time domain resources in NR-V2X.
FIG. 9 is a schematic flowchart of a communication method according to an embodiment of the present disclosure.
FIG. 10 is a schematic diagram of the REs occupied by the SL PRS in the frequency domain when the comb size = 6.
FIG. 11 is a schematic diagram of the REs occupied by the SL PRS in the frequency domain when the comb size = 6 and the RE offset is 2.
FIG. 12 is a schematic diagram of SL PRS time domain resources in one slot.
FIG. 13 is a schematic structural diagram of a communication device according to an embodiment of the present disclosure.
FIG. 14 is a schematic structural diagram of a device according to an embodiment of the present disclosure.

### DETAILED DESCRIPTION

Hereinafter, the technical solutions in the present disclosure will be described with reference to the accompanying drawings.

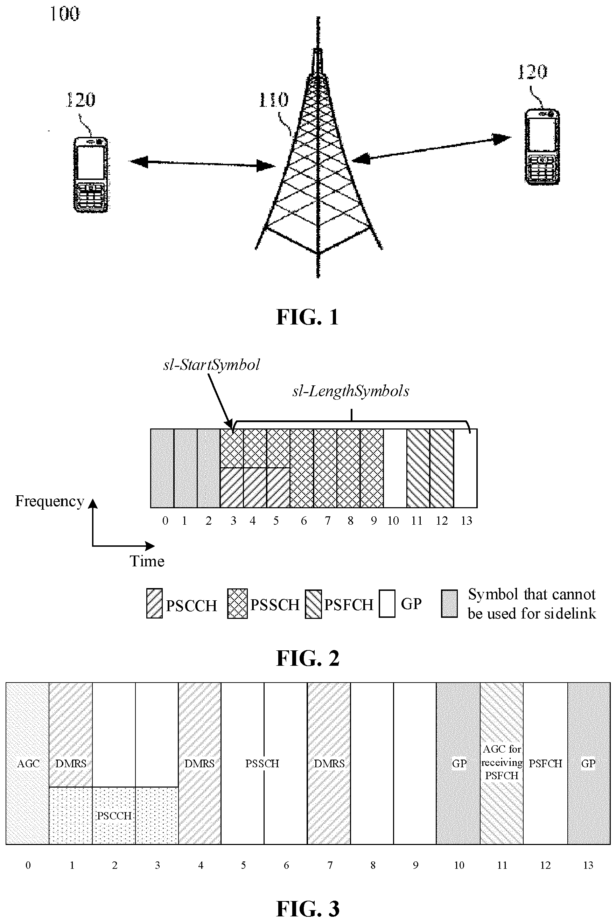

FIG. 1 illustrates a wireless communication system 100 to which an embodiment of the present disclosure is applied. The wireless communication system 100 may include a network device 110 and a user equipment (UE) 120. The network device 110 may communicate with the UE 120. The network device 110 may provide communication coverage for a particular geographic area and may communicate with the UE 120 located within the coverage area. The UE 120 may access a network, such as a wireless network, through the network device 110.

FIG. 1 exemplarily illustrates one network device and two UEs, optionally, the wireless communication system 100 may include multiple network devices and another number of terminal devices may be included within the coverage range of each network device, which is not limited by the embodiment of the present disclosure. Optionally, the wireless communication system 100 may further include other network entities such as a network controller and a mobility management entity, which is not limited by the embodiment of the present disclosure.

It should be understood that the technical solutions of the embodiments of the present disclosure may be applied to various communication systems, such as a fifth generation (5G) system or a new radio (NR), a long term evolution (LTE) system, an LTE frequency division duplex (FDD) system, an LTE time division duplex (TDD), and the like. The technical solution provided in the present disclosure may also be applied to future communication systems, such as a sixth generation mobile communication system, a satellite communication system, and the like.

The UE in the embodiment of the present disclosure may also be referred to as a terminal device, an access terminal, a subscriber unit, a subscriber station, a mobile site, a mobile station (MS), a mobile terminal (MT), a remote station, a remote terminal, a mobile device, a user terminal, a terminal, a wireless communication device, a user agent, or a user device. The UE in the embodiment of the present disclosure may be a device that provides voice and/or data connectivity to a user, and may be used to connect people, objects, and machines, for example, a handheld device and a vehicle-mounted device having wireless connection functions, or the like. The UE in the embodiment of the present disclosure may be a mobile phone, a Pad, a notebook computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, or the like. Optionally, the UE may be used to act as a base station. For example, the UE may act as a scheduling entity that provides sidelink signals between UEs in V2X or D2D, etc. For example, cellular telephones and automobiles communicate with each other using sidelink signals. Cellular telephones and smart home devices communicate with each other without relaying base station communication signals.

The network device in the embodiment of the present disclosure may be a device for communicating with the UE, and the network device may also be referred to as an access network device or a radio access network device, for example, the network device may be a base station. The network device in the embodiment of the present disclosure may refer to a radio access network (RAN) node (or device) that connects a UE to a wireless network. The base station may broadly cover or be substituted for various names listed below such as a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard wireless (MSR) node, a home base station, a network controller, an access node, a wireless node, an access point (AP), a transmitting and receiving node, a transceiver node, a base band unit (BBU), an remote radio unit (RRU), an active antenna unit (AAU), a remote radio head (RRH), a central unit (CU), a distributed unit (DU), a location node, and the like. The base station may be a macro base station, a micro base station, a relay node, a donor node, or the like, or a combination thereof.

In some embodiments, the network device may be fixed or mobile. For example, a helicopter or an unmanned aerial vehicle may be configured to act as a mobile network device, and one or more cells may move according to the location of the mobile network device. In other examples, a helicopter or an unmanned aerial vehicle may be configured as a device for communicating with another network device. In some embodiments, the network device may refer to a CU or a DU, or the network device may include a CU and a DU, or the network device may further include an AAU.

It should be understood that the network device may be deployed on land, including indoor or outdoor, handheld or vehicle-mounted, it can also be deployed on the water, it can also be deployed on aircraft, balloons and satellites in the air. In the embodiments of the present disclosure, the network device and the scenario in which the network device is located in the embodiments of the present disclosure are not limited.

It should also be understood that all or part of the functions of network devices and UEs in the present disclosure may also be implemented by software functions running on hardware, or by virtualization functions instantiated on a platform, such as a cloud platform.

The technical solution in the embodiment of the present disclosure can be applied to a sidelink (SL). The new radio vehicle to everything (NR-V2X) is a sidelink transmission technology applied to vehicle wireless communication. The sidelink is introduced below using NR-V2X as an example.

In NR-V2X, a physical sidelink shared channel (PSSCH) and its associated physical sidelink control channel (PSCCH) are transmitted in the same slot, and the PSCCH occupies two or three time domain symbols. The time domain resource allocation of NR-V2X takes a slot as allocation granularity. For example, the starting point and length of time domain symbols used for sidelink transmission in a slot may be configured by parameters sl-startSLsymbols and sl-lengthSLsymbols, the last symbol in these symbols is used as a guard period (GP) symbol, and the PSSCH and PSCCH can only use other time domain symbols. However, if a physical sidelink feedback channel (PSFCH) transmission resource is configured in a slot, the PSSCH and PSCCH cannot occupy the time domain symbol used for PSFCH transmission, and the automatic gain control (AGC) symbol and the GP symbol before the time domain symbol.

As illustrated in FIG. 2, the network configuration sl-StartSymbol = 3, sl-LengthSymbols = 11, that is, 11 time domain symbols starting from symbol index 3 in a slot can be used for sidelink transmission, and there is a PSFCH transmission resource in this slot, the PSFCH occupies symbol 11 and symbol 12. Symbol 11 serves as an AGC symbol of the PSFCH, symbol 10 and symbol 13 are used as GPs, respectively, the time domain symbols that can be used for PSSCH transmission are symbol 3 to symbol 9, the PSCCH occupies three time domain symbols, that is, symbol 3, symbol 4 and symbol 5, and symbol 3 is typically used as the AGC symbol.

In addition to PSCCH and PSSCH, PSFCH may also exist in one sidelink slot in NR-V2X. As illustrated in FIG. 3, it can be seen that in one slot, the first orthogonal frequency division multiplexing (OFDM) symbol is fixed for AGC, and on the AGC symbol, the UE copies the information sent on the second symbol. A symbol is reserved at the end of the time slot for transmission and reception conversion, and the symbol is used for the UE to convert from the sending (or receiving) state to the receiving (or sending) state. In the remaining OFDM symbols, the PSCCH may occupy two or three OFDM symbols starting from the second sidelink symbol. In the frequency domain, the number of physical resource blocks (PRBs) occupied by the PSCCH is within the subband range of one PSSCH. If the number of PRBs occupied by the PSCCH is less than the size of one subchannel of the PSSCH, or the frequency domain resources of the PSSCH include multiple subchannels, the PSCCH may be frequency division multiplexed with the PSSCH on the OFDM symbols in which the PSCCH is located.

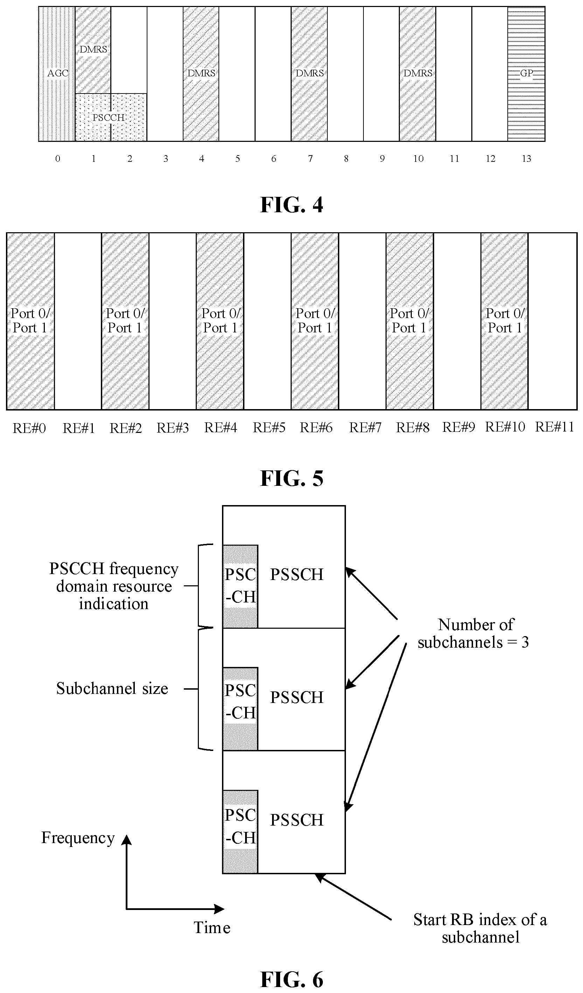

The demodulation reference signal (DMRS) of PSSCH in NR-V2X draws lessons from the design in the NR Uu interface and adopts multiple time domain PSSCH DMRS patterns. In a resource pool, the number of available DMRS patterns is related to the number of PSSCH symbols in the resource pool. For a specific number of PSSCH symbols (including the first AGC symbol) and a specific number of PSCCH symbols, the available DMRS patterns and the position of each DMRS symbol in the pattern are shown in Table 1. FIG. 4 illustrates a schematic diagram of the time domain position of 4 DMRS symbols when the number of PSSCH symbols is 13.

**Table 1 Number and positions of DMRS symbols under different numbers of PSSCH symbols and different numbers of PSCCH symbols**

| Number of PSSCH symbols | Position of DMRS symbol (relative to the position of first AGC symbol) | | | | | |
|---|---|---|---|---|---|---|
| | Number of PSCCH symbols is 2 | | | Number of PSCCH symbols is 3 | | |
| | Number of DMRS Symbols | | | Number of DMRS Symbols | | |
| (including the first AGC symbol) | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If multiple time domain DMRS patterns are configured in the resource pool, the specific adopted time domain DMRS pattern is selected by the sending UE and is indicated in the first-order SCI. Such a design allows a high-speed moving UE to select a high-density DMRS pattern, thereby ensuring the accuracy of channel estimation, while for a low-speed moving UE, a low-density DMRS pattern can be adopted to enable to improve spectral efficiency.

The generation method of PSSCH DMRS sequence and the generation method of PSCCH DMRS sequence are almost identical, with the only difference being that in the initialization formula *c*ᵢₙᵢₜ of the pseudo-random sequence *c*(*m*), ${N}_{ID} = {\sum }_{i = 0}^{L - 1} {p}_{i} ⋅ {2}^{L - 1 - i}$, *pᵢ* is the *i*-th bit cyclic redundancy check (CRC) of the PSCCH scheduling the PSSCH, *L* is the number of bits of the PSCCH CRC, *L*=24.

Two frequency domain DMRS patterns, namely, DMRS frequency domain type 1 and DMRS frequency domain type 2, are supported in the NR physical downlink shared channel (PDSCH) and physical uplink shared channel (PUSCH), and for each frequency domain type, there are two different types: single DMRS symbol and dual DMRS symbol. The single-symbol DMRS frequency domain type 1 supports four DMRS ports, and single-symbol DMRS frequency domain type 2 can support six DMRS ports. In the case of dual DMRS symbols, the number of supported ports is doubled. However, in NR-V2X, since PSSCH only needs to support two DMRS ports at most, only the single-symbol DMRS frequency domain type 1 is supported, as illustrated in FIG. 4.

Two frequency domain DMRS patterns, namely, DMRS frequency domain type 1 and DMRS frequency domain type 2, are supported in the NR PDSCH and PUSCH, and for each frequency domain type, there are two different types: single DMRS symbol and dual DMRS symbol. The single-symbol DMRS frequency domain type 1 supports four DMRS ports, and single-symbol DMRS frequency domain type 2 can support six DMRS ports. In the case of dual DMRS symbols, the number of supported ports is doubled. However, in NR-V2X, since PSSCH only needs to support two DMRS ports at most, only the single-symbol DMRS frequency domain type 1 is supported, as illustrated in FIG. 5.

Similar to LTE-V2X, the frequency domain resources of the NR-V2X resource pool are also continuous, and the allocation granularity of the frequency domain resources is also a subchannel. The number of PRBs included in one subchannel is {10, 12, 15, 20, 50, 75, 100}, and the size of the minimum subchannel is 10 PRBs, which is much larger than the size of the minimum subchannel size of 4 PRBs in LTE-V2X. This is mainly because the frequency domain resources of PSCCH in NR-V2X are located in the first subchannel of the associated PSSCH, and the frequency domain resources of PSCCH are less than or equal to the size of one subchannel of PSSCH. However, the time domain resources of PSCCH occupy 2 or 3 OFDM symbols. If the size configuration of the subchannel is relatively small, it will lead to very few available resources for PSCCH, an increase in the bit rate, and a reduction in the detection performance of PSCCH. In NR-V2X, the size of the PSSCH subchannel and the size of the frequency domain resources of the PSCCH are independently configured, but it is necessary to ensure that the frequency domain resources of the PSCCH are less than or equal to the size of the subchannel of the PSSCH. The following configuration parameters in the NR-V2X resource pool configuration information are used to determine frequency domain resources of the PSCCH resource pool and the PSSCH resource pool:
- Subchannel size (sl-SubchannelSize): it indicates the number of consecutive PRBs included in a subchannel in the resource pool, and the value range is {10, 12, 15, 20, 50, 75, 100} PRBs;
- Number of subchannels (sl-NumSubchannel): it indicates the number of subchannels included in the resource pool;
- Start RB index of a subchannel (sl-StartRB-Subchannel): it indicates the start PRB index of the first subchannel in the resource pool;
- Number of PRBs (sl-RB-Number): it indicates the number of consecutive PRBs included in the resource pool;
- PSCCH frequency domain resource indication (sl-FreqResourcePSCCH): it indicates the size of the frequency domain resources of PSCCH, and the value range is {10, 12, 15, 20, 25} PRBs.

When the UE determines a resource pool for sending PSSCH or receiving PSSCH, the frequency domain resources included in the resource pool are sl-NumSubchannel consecutive subchannels starting from the PRB indicated by sl-StartRB-Subchannel, and finally if the number of PRBs included in the sl-NumSubchannel consecutive subchannels is less than the number of PRBs indicated by sl-RB-Number, the remaining PRBs cannot be used for sending or receiving PSSCH.

In NR-V2X, the PSCCH is aligned with the frequency domain start position of the first subchannel of the associated PSSCH, so as illustrated in FIG. 6, the start position of each PSSCH subchannel is the possible frequency domain start position of the PSCCH, and the frequency domain ranges of the resource pools of the PSCCH and the PSSCH can be determined according to the above parameters.

In NR-V2X, the PSCCH is used to carry sidelink control information related to resource listening, which includes:
- a priority of a scheduled transmission;
- a frequency domain resource allocation indicating the number of frequency domain resources of the PSSCH within the current slot scheduled by the PSCCH, and the number of frequency domain resources and the start position of the up to two retransmission resources reserved;
- a time domain resource allocation indicating the time domain location of up to two retransmission resources;
- a reference signal pattern of PSSCH;
- a second-order sidelink control information (SCI) format;
- a second order SCI (e.g. SCI 2-A or SCI 2-B) bit rate offset;
- a number of PSSCH DMRS ports;
- a modulation and coding scheme (MCS);
- a MCS table indication;
- a number of PSFCH symbols;
- a resource reservation period, it reserves resources sent by another transport block (TB) in the next cycle. If inter-TB resource reservation is not activated in the resource pool configuration, this information bit field does not exist.
- reserved bits: 2 ~ 4 bits, the specific number of bits is configured or pre-configured by the network.

Since the PSCCH is always sent with the scheduled PSSCH within a slot, and the start position of the PRB occupied by the PSCCH is the start position of the first subchannel of the scheduled PSSCH, the time-frequency domain start positions of the scheduled PSSCH are not explicitly indicated in the SCI format 1-A.

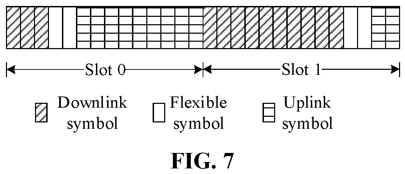

In NR-V2X, the transmission of PSCCH/PSSCH is based on the slot level, that is, only one PSCCH/PSSCH can be transmitted in one slot, and it does not support to send multiple PSCCH/PSSCH in a slot through time-division multiplexing (TDM). PSCCH/PSSCH between different users can be multiplexed in a slot through frequency-division multiplexing (FDM). The time domain resource of the PSSCH in NR-V2X is slot granularity, but unlike LTE-V2X where the PSSCH occupies all the time domain symbols in one subframe, the PSSCH in NR-V2X may occupy partial symbols in one slot. This is mainly because in the LTE system, uplink or downlink transmission are also subframe granularity, so sidelink transmission is also subframe granularity (special subframes in the TDD system are not used for sidelink transmission). In NR system, flexible slot structure is adopted, that is, a slot includes both uplink symbols and downlink symbols, so that more flexible scheduling can be realized and the time delay can be reduced. The typical subframe of a NR system is illustrated in FIG. 7, and the slot may include downlink (DL) symbols, uplink (UL) symbols, and flexible symbols. The downlink symbols are located at the start position of the slot, the uplink symbosl are located at the end position of the slot, between the downlink symbols and the uplink symbols are the flexible symbols, and the number of various symbols in each slot is configurable.

The sidelink transmission system can share the carrier with the cellular system, and at this time, the sidelink transmission can only use the uplink transmission resources of the cellular system. For NR-V2X, if sidelink transmission is still needed to occupy all time domain symbols in a slot, slots with all uplink symbols that need to be configured by the network are used for sidelink transmission, which will greatly affect the uplink data transmission and downlink data transmission of the NR system and reduce the performance of the system. Thus, in NR-V2X, partial time domain symbols in a slot are supported for sidelink transmission, i.e. partial uplink symbols in one slot are used for sidelink link transmission. In addition, considering that AGC symbols and GP symbols are included in sidelink transmission, if the number of uplink symbols available for sidelink transmission is small, the AGC symbols and GP symbols are removed, and there are fewer symbols available for transmitting valid data, and the resource utilization rate is very low. Therefore, the number of time domain symbols occupied by sidelink transmission in NR-V2X is at least 7 (including GP symbols). When the sidelink transmission system uses a proprietary carrier, there is no problem of sharing transmission resources with other systems at this time, and all symbols in the slot can be configured to be used for sidelink transmission.

As described above, in NR-V2X, the starting point and length of the time domain symbols used for sidelink transmission in one slot are configured by the parameters: the position of start symbol (sl-StartSymbol) and the number of symbols (sl-LengthSymbols), the last symbol in the time domain symbols used for sidelink transmission is used as the GP, and the PSSCH and PSCCH can only use other time domain symbols. However, if the PSFCH transmission resource is configured in one slot, PSSCH and PSCCH cannot occupy the time domain symbols used for PSFCH transmission, as well as the AGC symbols and GP symbols prior to the time domain symbols.

In the NR-V2X system, the time domain resources of the resource pool are also indicated by a bitmap. Considering the flexible slot structure in the NR system, the length of the bitmap is also extended, and the supported bitmap length range is [10: 160]. The method of determining the slot position belonging to the resource pool in one SFN period by using the bitmap is the same as that in LTE-V2X, but there are two differences as follows.

The total number of slots included in one system frame number (SFN) period is 10240 × 2*^{µ}*, where the parameter *µ*, is related to the size of the subcarrier spacing.

If at least one time domain symbol included in time domain symbols *Y, Y + 1, Y +* 2, ..., *Y + X -* 1 of a slot is not configured as an uplink symbol by the TDD-UL-DL-ConfigCommon signaling of the network, the slot cannot be used for sidelink transmission. Y and X indicate sl-StartSymbol and sl-LengthSymbols, respectively.

Specifically, the following steps are included.

At step 1, in the SFN period, slots that do not belong to the resource pool are removed, including synchronization slots and slots that cannot be used for sidelink transmission, etc. The remaining slots are denoted as the remaining slot set, and the remaining slots are renumbered as (*l*₀, *l*₁, ··· , *l*_{(10240×2*µ*-*NS_SSB-NnonSL*-1)}).

*N_{S_SSB}* indicates the number of synchronization slots in one SFN cycle; the synchronization slots are determined according to the synchronization related configuration parameters, and are related to the period of transmitting the synchronization signal block (SSB), the number of transmission resources of the SSB configured in the period, and the like;

*N_{nonSL}* indicates the number of slots that do not conform to the configuration of the starting point and the number of uplink symbols in one SFN period: if at least one time domain symbol included in time domain symbols *Y, Y + 1, Y* + *2, ..., Y + X -* 1 of a slot is not semi-statically configured as an uplink symbol, the slot cannot be used for sidelink transmission, Y and X indicate sl-StartSymbol and sl-LengthSymbols, respectively,.

At step 2, the number of reserved slots and the corresponding time domain positions are determined.

If the number of slots in the remaining slot set cannot be divided evenly by the length of the bitmap, the number of reserved slots and the corresponding time domain positions need to be determined. Specifically, if a slot *lᵣ* (0 ≤ r < 10240 × 2*^{µ} - N_{S_SSB} - N_{nonSL}*) meets the following conditions, the slot is a reserved slot, $r = \left⌊\frac{m ⋅ \left(10240\times {2}^{μ}-{N}_{S _ SSB}-{N}_{nonSL}\right)}{{N}_{reserved}}\right⌋$

*N_{reserved}* = (10240 × 2*^{µ} - N_{S_SSB} - N_{nonsL}*) *mod L_{bitmap}* indicates the number of reserved slots, *L_{bitmap}* indicates the length of the bitmap, *m* = 0,..., *N_{reserved}* - 1.

At step 3, the reserved slots in the remaining slot set are removed, and the left slot set is expressed as a logical slot set. The slots in the logical slot set are all available for the resource pool, and the slots in the logical slot set are renumbered as $\left({t}_{0}^{SL},{t}_{1}^{SL},…,{t}_{{T}_{max} - 1}^{SL}\right)$, wherein, *Tₘₐₓ* = 10240 × 2*^{µ}* - *N_{S_SSB}* - *N_{nonSL} - N_{reserved}.*

At step 4, slots belonging to the resource pool in the logical slot set are determined according to the bitmap.

The bitmap in the resource pool configuration information is (*b*₀, *b*₁**, . . . ,** *b*_{*Lbitmap*-1}) , for slots ${t}_{k}^{SL} \left(0\leq k<\left(10240\times {2}^{μ}-{N}_{S _ SSB}-{N}_{nonSL}-{N}_{reserved}\right)\right)$ in the set of logical slots, when *bₖ*, = 1 is satisfied, the slot is a slot belonging to the resource pool, wherein *k' = k mod L_{bitmap}.*

At step 5, the slots which belong to the resource pool and are determined in step 4 are sequentially renumbered as $t {′}_{i}^{SL}$, *i* ∈{0, 1, *...,T'ₘₐₓ* - 1}, *T'ₘₐₓ* indicates the number of slots included in the resource pool.

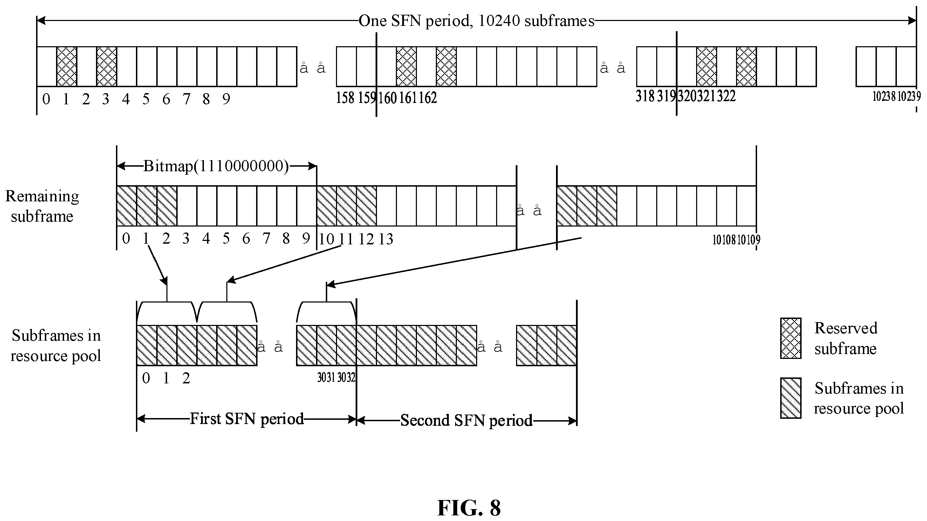

As illustrated in FIG. 8, one SFN period (or a direct frame number (DFN) period) includes 10240 subframes, the period of the synchronization signal is 160 ms, and two synchronization subframes are included in one synchronization period. Therefore, there are 128 synchronization subframes in one SFN period. The length of the bitmap used to indicate the time domain resources of the resource pool is 10 bits, so two reserved subframes are required. The number of remaining subframes is (10240-128-2=10110), which can be divided evenly by the length of the bit map, 10. The remaining subframes are renumbered as 0, 1, 2, ..., 10109. The first 3 bits of the bitmap are 1, and the remaining 7 bits are 0, that is, among the remaining subframes, the first 3 subframes in every 10 subframes belong to this resource pool, while the other subframes do not. Since the bitmap are needed to be repeated 1011 times in the remaining subframes to indicate whether all subframes belong to the resource pool, and each bitmap period includes 3 subframes, a total of 3033 subframes belong to the resource pool in one SFN period.

Two measurement quantities: a channel busy ratio (CBR) and a channel occupancy ratio (CR), are defined in NR V2X to support congestion control. CBR is defined as: CBR measures a ratio of subchannels whose sidelink received signal strength indicator (SL RSSI) is higher than the configuration threshold within a window [n - c, n - 1] to a total number of sub-channels in the resource pool, *c* is equal to 100 or 100 · 2*^{µ}* slots. CR is defined as: a ratio of the number of subchannels that the UE has used to send data within the range [n - *a, n* - 1] and the number of subchannels included in the obtained sidelink grant within the range *[n, n* + *b]* to the total number of subchannels belonging to the resource pool within the range [n - *a, n* + *b],* CR can be calculated separately for different priorities. *a* is a positive integer, *b* is 0 or a positive integer, the values of *a* and *b* are determined by the UE, but the following three conditions need to be met:
1) $a + b + 1 = 1000$ or 1000 - 2*^{µ}* slots;
2) $b < \left(a+b+1\right) / 2 ;$ and
*3) n + b* does not exceed the last retransmission of the current transmission as indicated by the sidelink grant.

For a UE in a radio resource control (RRC) connection state, the CBR should be measured and reported according to the configuration of the gNB. The UE should perform congestion control according to the measured CBR and CR. Specifically, in one resource pool, the congestion control procedure limits the following PSCCH/PSSCH transmission parameters:
the MCS range supported within the resource pool;
the optional range of the number of subchannels;
the maximum number of retransmissions in mode 2 (in sidelink communication);
the maximum transmission power; and
   ${\sum }_{i \geq k} CR \left(i\right) \leq {CR}_{Limit} \left(k\right) .$

*CR(i)* is the CR of the sidelink transmission with the priority *i* measured in a slot *n - N*, *CR_{Limit}*(*k*) is the CR limit of the measured CBR which is configured by the system and is for sidelink transmission with the priority *k* and a slot *n - N, N* represents the time required for the UE to process the congestion control and is related to *µ*.

In the 3rd generation partnership project (3GPP) R17, the 3GPP RAN conducted research on "NR positioning enhancements" and "scenarios and requirements for in-coverage, partial coverage, and out-of-coverage NR positioning use cases", in which the research "scenarios and requirements for in-coverage, partial coverage, and out-of-coverage NR positioning use cases" focuses on V2X and public safety use cases. In addition, the 3GPP SA1 working group has also formulated the requirement for "ranging-based services" and formulated the positioning accuracy requirement for the use of the internet of things (IoT) in out-of-coverage scenarios. 3GPP needs to research and develop sidelink location solutions to support the use cases, scenarios, and requirements identified in these activities.

In order to improve positioning accuracy, especially to realize the positioning of UE located outside the coverage of cellular network, 3GPP completed the feasibility and performance research of positioning technology based on sidelink positioning reference signals in the early stage of Rel-18. Solutions based on sidewalk positioning (including ranging/direction finding) in NR systems will be standardized next, including the followings.
- The sidelink positioning reference signal (SL PRS) will be standardized. SL PRS uses a frequency domain structure based on a comb (full RE mapping mode is not excluded), adopts a sequence format based on a pseudo-random sequence, and uses the existing downlink positioning reference signal (DL PRS) sequence as the design starting point, and supports SL PRS bandwidth of up to 100 MHz in frequency range 1 (FR1).
- The measurements used to support positioning methods such as SL round trip time (RTT), SL angle of arrival (AOA), and SL time difference of arrival (TDOA) will be standardized.
- The resource allocation schemes of SL PRS will be standardized, the resource allocation schemes of SL PRS include resource allocation scheme 1 and scheme 2, scheme 1 corresponds to the SL PRS resources allocated by the network, and scheme 2 corresponds to the SL PRS resources independently selected by the UE. The SL PRS and R16/R17/R18 sidelink communication are supported to share resource pools and SL PRS dedicated resource pool. For Scheme 2, resource selection and/or random resource selection based on channel listening, congestion control, and/or resource selection based on UE coordination needs to be studied and standardized.
- The open-loop power control mechanisms for sending SL PRS will be standardized, etc.

In sidelink positioning, the transmission of the SL PRS also needs to be subject to congestion control, but it is currently unclear how to perform congestion control on the SL PRS.

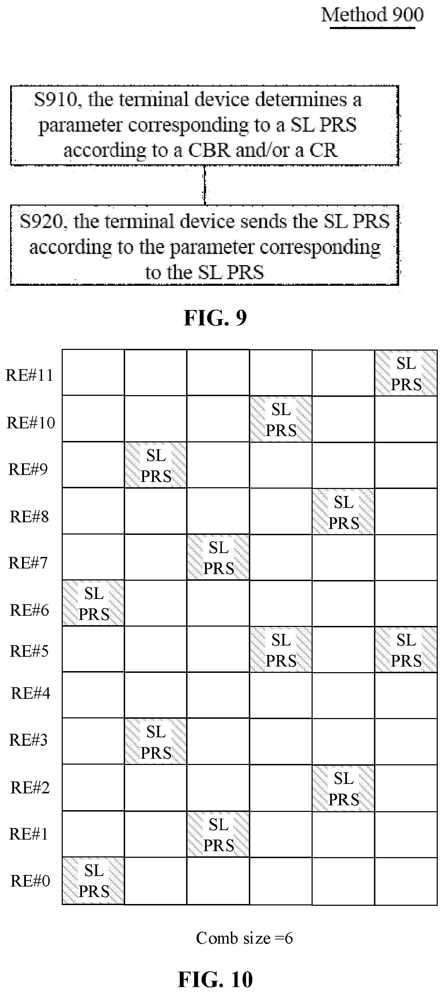

In order to solve one or more of the above-described technical problems, the present disclosure proposes a communication method and a communication device. An embodiment of the present disclosure will be described in detail with reference to FIG. 9.

FIG. 9 is a schematic flowchart of a communication method according to an embodiment of the present disclosure. The method 900 illustrated in FIG. 9 may include operation S910 and operation S920 as follows:
At S910, the terminal device determines a parameter corresponding to a SL PRS according to a CBR and/or a CR.

The terminal device may determine parameter(s) according to the correspondence between the CBR and/or the CR and the parameter(s) (corresponding to the SL PRS). Optionally, the correspondence may be defined by a communication standard, configured by a network, or preconfigured.

Optionally, the parameter corresponding to the SL PRS may include one or more of the following: a maximum transmission power, a bandwidth range, a maximum number of transmissions, a minimum transmission period, a minimum comb size and a threshold corresponding to the CR.

For example, taking the CBR and the maximum transmission power as an example, when the CBR is A, the maximum transmission power P may be corresponded, when the CBR is B, the maximum transmission power Q may be corresponded. When the CBR of the terminal device is A, the maximum transmission power may be determined to be P. A, B, P and Q are all real numbers.

The parameter corresponding to the SL PRS will be described in detail below.

The maximum transmission power may refer to an allowed maximum SL PRS transmission power. For example, if a physical channel (e.g., PSCCH) for the SL PRS sending and the SL PRS are indicated to be frequency division multiplexed, the maximum transmission power may be a maximum value of the total transmission powers of the physical channel and the SL PRS. If the physical channel transmission (e.g., PSCCH) for the SL PRS sending and the SL PRS are indicated to be time division multiplexed, the maximum transmission power is also the maximum value of the transmission powers of the physical channel. The value of the maximum transmission power may be different for different SL PRS priorities, for example, the higher the priority (the smaller the priority index), the larger the maximum transmission power.

The bandwidth range (or allowed bandwidth range) may refer to the bandwidth range that the SL PRS can occupy. The bandwidth range may be different for different SL PRS priorities, e.g., the higher the priority (the smaller the priority index), the larger the allowed maximum bandwidth.

The maximum number of transmissions (or referred to as the allowed maximum number of transmissions) may refer to the number of repeated transmissions of the SL PRS. For example, if the SL PRS is sent periodically, the allowed maximum number of transmissions may refer to the number of repeated transmissions of the SL PRS in one period. The allowed maximum number of transmissions may be different for different SL PRS priorities, e.g., the higher the priority (the smaller the priority index), the larger the allowed maximum number of transmissions.

The minimum transmission period may refer to the allowed minimum transmission period, which may be different for different SL PRS priorities, for example, the higher the priority (the smaller the priority index), the smaller the allowed minimum transmission period.

The minimum comb size may refer to the allowable minimum comb size, for example, as illustrated in FIG. 10, the minimum comb size refers to the minimum interval between REs occupied by the SL PRS in the frequency domain. The allowed minimum comb size may be different for different SL PRS priorities, e.g., the higher the priority (the smaller the priority index), the smaller the allowed priority size. In order to avoid interference between different UEs, the sizes used by different priorities may be in multiple relationships, for example, different priorities may use the sizes {2, 4, 8} respectively.

The threshold corresponding to the CR may refer to the upper limit of CR of the SL PRS for the priority k measured by the UE, for example, the threshold corresponding to CR may be *CR_{Lim}it*(*k*), the UE must ensure that Σ_{*i*≥}*ₖ CR*(*i*) ≤ *CR_{Limit}*(*k*). *CR*(*i*) is the CR of the SL PRS for priority *i* measured by the UE, *CR_{Limit}*(*k*) is the limit of CR for transmitting SL PRS for the priority k configured by the system.

The CBR is used to measure the ratio of resources, whose first parameter is higher than a preset threshold, in a SL PRS resource pool (which may also be referred to as a SL PRS dedicated resource pool or a resource pool for sending SL PRS) within a first time range. Optionally, the CBR is a ratio of first resources, whose first parameter is higher than the preset threshold, in the SL PRS resource pool within the first time range. Optionally, the first parameter may be a sidelink received signal strength indicator (SL RSSI).

The CBR may be measured by the terminal device, defined by the communication standard, configured by the network or preconfigured, and the first time range and the preset threshold may be defined by the standard, configured by the network or preconfigured. For example, the first time range for calculating the CBR may be [n - c, n - 1], *c* may be equal to 100 or 100 - 2*^{µ}* slots. n , c and *µ* all are natural numbers.

The CR may be used to measure the ratio of resources occupied by the UE in the SL PRS resource pool within the second time range. Optionally, the CR may be a ratio of a number of second resources occupied by the terminal device within a second time range to a total number of the second resources belonging to the SL PRS resource pool in the second time range; or the CR may be a ratio of the number of the second resources occupied by the terminal device within the second time range divided by M to the total number of the second resources belonging to the SL PRS resource pool in the second time range, and M is a number of resource element (RE) offsets allowed in the SL PRS resource pool.

The CR may be measured by the terminal device, defined by the communication standard, configured by the network or preconfigured, and the second time range may be defined by the standard, configured by the network or preconfigured. Optionally, the second time range may include a third time range (such as the third time range may be [*n* - *a*, *n* - 1]) and a fourth time range (e.g. the fourth time range may be *[n, n* + *b])* in subsequent embodiments. For example, the second time range for calculating the CR may be slots within the range [*n* - *a*, *n* + *b*], *a* + *b* + 1 = 1000 or 1000 · 2*^{µ}* slots, *n* + b does not exceed the slot in which the last SL PRS transmission opportunity indicated in the SL grant scheduling the current SL PRS transmission is located, and b ≥ 0, b < (a + b + 1)/2. n , *a*, b and *µ* all are natural numbers.

In the present disclosure, the terminal device may determine the CBR and the CR according to multiple different methods, and these methods will be described in detail below.

In some embodiments, a bandwidth of the SL PRS sent by the terminal device is equal to a bandwidth of the SL PRS resource pool. For example, for the SL PRS dedicated resource pool, the SL PRS is configured or pre-configured with multiple time-division time domain SL PRS resources in one slot, and the SL PRS bandwidth sent by the UE is always equal to the bandwidth of the SL PRS resource pool.

Optionally, the first resource may be a SL PRS time domain resource, and the first parameter may be a linear average value of received powers measured on multiple orthogonal frequency division multiplexing (OFDM) symbols included in one SL PRS time domain resource for sending SL PRS in the SL PRS resource pool; or the first resource may be an OFDM symbol, and the first parameter may be a received power measured on one OFDM symbol used for the sending SL PRS in the SL PRS resource pool.

In the present embodiment, the bandwidth of the SL PRS is always equal to the bandwidth of the SL PRS resource pool. Therefore, if one UE sends the SL PRS on one OFDM symbol, the transmission power in any frequency domain range of the OFDM symbol should be equal. Therefore, CBR can be defined as:
a ratio of SL PRS time domain resources, whose SL RSSI is higher than a preset threshold, in the resource pool for sending SL PRS within the first time range, and the SL RSSI may be a linear average value of received powers measured on multiple OFDM symbols included in one time domain resource for sending SL PRS in the resource pool; or
a ratio of OFDM symbols, whose SL RSSI is higher than the preset threshold, in the resource pool for sending SL PRS within the first time range, and the SL RSSI may be a received power measured on one OFDM symbol for sending SL PRS in the resource pool.

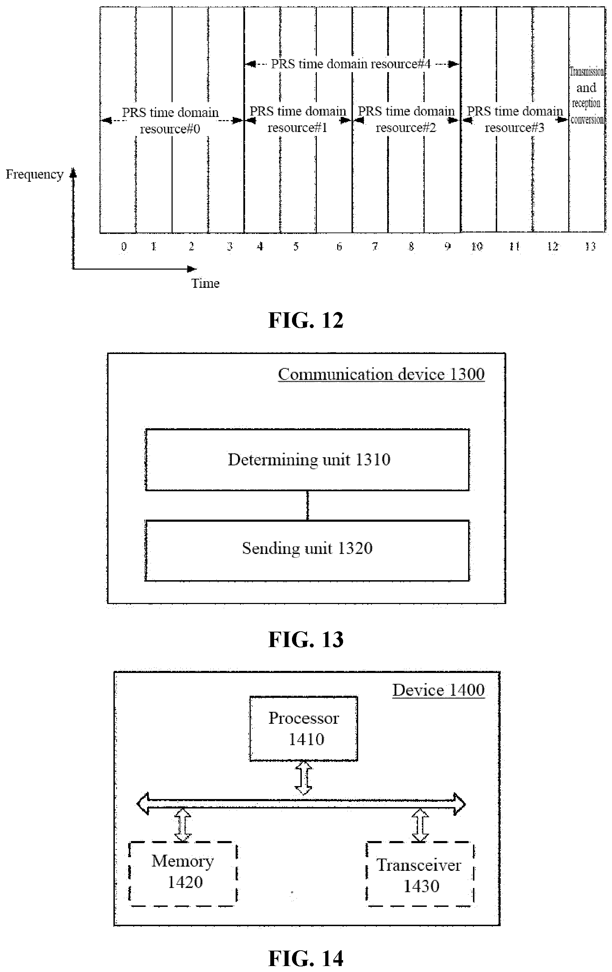

Since the receiving UE needs to perform AGC adjustment on the first OFDM symbol of each SL PRS time domain resource, the received power on the first OFDM symbol in each SL PRS time domain resource is not included in the calculation of the SL RSSI. For example, in the example illustrated in FIG. 12, the received powers on the OFDM symbol#0, OFDM symbol#4, OFDM symbol#7, and OFDM symbol#10 are not taken into account when calculating the SL RSSI.

The above-described embodiment is suitable for the SL PRS dedicated resource pool, and is beneficial to simplify the calculation of the CBR.

Optionally, the first resource may correspond to a time-frequency resource composed of one resource element (RE) offset and one SL PRS time domain resource, and the first parameter may be a linear average value of received powers measured on a RE occupied by the SL PRS on OFDM symbols included in the SL PRS time domain resource.

Since the SL PRS may adopt a comb structure, and different RE offsets may be used by different UEs, another CBR calculation method may be a ratio of SL PRS resources, whose SL RSSI is higher than a preset threshold, in the resource pool for sending SL PRS within the first time range, the SL PRS resource may correspond to one {RE offset, SL PRS time domain resource}. The SL RSSI may be a linear average of received powers measured on a RE occupied by the SL PRS within the OFDM symbol included in the SL PRS time domain resource.

Since the receiving UE needs to perform AGC adjustment on the first OFDM symbol of each SL PRS time domain resource, the received power on the first OFDM symbol in each SL PRS time domain resource is not included in the calculation of the SL RSSI. For example, in the example illustrated in FIG. 12, the received powers on OFDM symbol#0, OFDM symbol#4, OFDM symbol#7, and OFDM symbol#10 are not taken into account when calculating the SL RSSI.

If it is indicated that the PSCCH of the SL PRS is sent by occupying part of the time-frequency resources among the SL PRS time domain resources, the OFDM symbol occupied by the PSCCH may not be included in the calculation of the SL RSSI.

The CBR on the resource used for the PSCCH may be calculated separately, for example, the CBR is defined as a ratio of the PSCCH resources, whose SL RSSI is higher than a preset threshold, in the resource pool among all the resources used for the PSCCH, the SL RSSI is defined as a received power measured on one PSCCH resource, and one PSCCH resource is one or more specific PRBs on a specific OFDM symbol in the SL PRS time domain resource.

Optionally, the first resource may correspond to a time-frequency resource composed of one RE offset and one OFDM symbol, and the first parameter may be a received power measured on a RE occupied by the SL PRS on the OFDM symbol.

Since the SL PRS may adopt a comb structure, different RE offsets may be used by different UEs, and the number of OFDM symbols included in the SL PRS time domain resource configured in the SL PRS resource pool may be different. In order to more accurately reflect the resource occupancy in the SL PRS resource pool, the CBR calculation method may be a ratio of {RE offsets, OFDM symbols}, whose SL RSSI is higher than a preset threshold, in the resource pool for sending SL PRS within the first time range. The SL RSSI may be a received power measured on the RE occupied by one SL PRS in one OFDM symbol.

Since the receiving UE needs to perform AGC adjustment on the first OFDM symbol of each SL PRS time domain resource, the received power on the first OFDM symbol in each SL PRS time domain resource is not included in the calculation of the SL RSSI. For example, in the example illustrated in FIG. 12, the received powers on OFDM symbol#0, OFDM symbol#4, OFDM symbol#7, and OFDM symbol#10 are not taken into account when calculating the SL RSSI.

If it is indicated that the PSCCH of the SL PRS is sent by occupying part of the time-frequency resources among the SL PRS time domain resources, the OFDM symbol occupied by the PSCCH may not be included in the calculation of the SL RSSI.

The CBR on the resource used for the PSCCH may be calculated separately, for example, the CBR is defined as a ratio of the PSCCH resources, whose SL RSSI is higher than a preset threshold, in the SL PRS resource pool among all the resources used for the PSCCH, the SL RSSI is defined as a received power measured on one PSCCH resource, and one PSCCH resource is one or more specific PRBs on a specific OFDM symbol in the SL PRS time domain resource.

Optionally, the second resource may be an OFDM symbol.

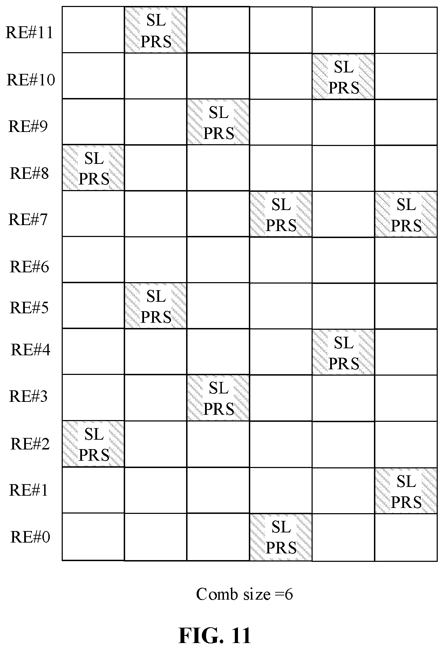

Since the SL PRS sent by the UE always occupies the bandwidth of the entire SL PRS resource pool, and although the UE only occupies a part of the RE in the bandwidth, there is in-band leakage interference between different UEs, and usually different UEs cannot be multiplexed by frequency division, CR can be defined as a ratio of a number of OFDM symbols occupied by the UE within the second time range to a total number of OFDM symbols belonging to the SL PRS resource pool in the second time range. If different UEs are allowed to be multiplexed by frequency division in some cases, CR may be defined as a ratio of the number of OFDM symbols occupied by the UE divided by M to the total number of OFDM symbols belonging to the SL PRS resource pool in the second time range. M is the number of RE offsets allowed in the resource pool, the value range of the RE offset is 0, 1,..., the comb size - 1. The RE offset may represent the interval between the RE occupied by the SL PRS and the RB starting point on the first OFDM symbol for sending SL PRS. For example, in Fig. 10, the RE offset is 0, while in the example given in Fig. 11, the RE offset is 2. The allowed RE offset within the resource pool may be configured by network configuration or preconfigured, or defined by communication standards.

Optionally, the second resource may correspond to a time-frequency resource composed of one RE offset and one SL PRS time domain resource, and the SL PRS time domain resource may include multiple OFDM symbols occupied when one SL PRS is sent.

The CR may be defined as a ratio of the number of SL PRS resources occupied by the UE within the second time range to a total number of SL PRS resources belonging to the SL PRS resource pool in the second time range. One SL PRS resource may correspond to a group of {RE offset, SL PRS time domain resource}, and the SL PRS time domain resource may multiple OFDM symbols occupied for sending one SL PRS. As illustrated in FIG. 12, the multiple OFDM symbols included in the SL PRS time domain resource may be located in the same slot, and the multiple OFDM symbols included in the SL PRS time domain resource may be continuous or discontinuous (only the case where the multiple OFDM symbols are continuous is illustrated in FIG. 12).

In some embodiments, the bandwidth of the SL PRS sent by the terminal device may be less than the bandwidth of the SL PRS resource pool. For example, the SL PRS is configured or preconfigured with multiple time-division time domain SL PRS resources in one slot, and the bandwidth of the SL PRS sent by the UE may be less than the bandwidth of the SL PRS resource pool.

Optionally, the first resource may correspond to a time-frequency resource composed of one subchannel and one SL PRS time domain resource, and the first parameter may be a linear average value of received powers measured in one subchannel on multiple OFDM symbols included in one SL PRS time domain resource for sending SL PRS in the SL PRS resource pool; or the first resource may correspond to a time-frequency resource composed of one subchannel and one OFDM symbol, and the first parameter may be a received power measured in one subchannel on one OFDM symbol for sending SL PRS in the SL PRS resource pool.

In the present embodiment, the bandwidth of the SL PRS may be less than the bandwidth of the SL PRS resource pool, and the minimum frequency domain size of the SL PRS is a subchannel, so the received powers in different subchannels on one OFDM symbol may be different, so the CBR may be defined as:
a ratio of {subchannel, SL PRS time domain resource}, whose SL RSSI is higher than a preset threshold, in the resource pool for sending SL PRS within the first time range, and the SL RSSI may be a linear average of received powers measured in one subchannel on multiple OFDM symbols included in one time domain resource for sending SL PRS in the resource pool; or
a ratio of {subchannel, OFDM symbol}, whose SL RSSI is higher than a preset threshold, in the resource pool for sending SL PRS within the first time range, and the SL RSSI may be a received power measured in one subchannel on one OFDM symbol for sending SL PRS in the resource pool.

Since the receiving UE needs to perform AGC adjustment on the first OFDM symbol of each SL PRS time domain resource, the received power on the first OFDM symbol in each SL PRS time domain resource is not included in the calculation of the SL RSSI. For example, in the example illustrated in FIG. 12, the received powers on OFDM symbol#0, OFDM symbol#4, OFDM symbol#7, and OFDM symbol#10 are not taken into account when calculating the SL RSSI.

The above-described embodiment is suitable for the SL PRS dedicated resource pool, and is beneficial to simplify the calculation of the CBR.

Optionally, the first resource corresponds to a time-frequency resource composed of one RE offset, one subchannel, and one SL PRS time domain resource, and the first parameter is a linear average value of received powers measured on a RE occupied by the SL PRS in one subchannel on OFDM symbols included in the SL PRS time domain resource.

Since the SL PRS may adopt a comb structure, different RE offsets may be used by different UEs, and the bandwidth occupied by the SL PRS may be less than the bandwidth of the resource pool, another CBR calculation method may be a ratio of SL PRS resources, whose SL RSSI is higher than a preset threshold, in the resource pool for sending SL PRS within the first time range, the SL PRS resource corresponds to one {RE offset, subchannel, SL PRS time domain resource}. The SL RSSI may be a linear average of received powers measured on the RE occupied by the SL PRS in one subchannel on the OFDM symbol included in the SL PRS time domain resource.

Since the receiving UE needs to perform AGC adjustment on the first OFDM symbol of each SL PRS time domain resource, the received power on the first OFDM symbol in each SL PRS time domain resource is not included in the calculation of the SL RSSI. For example, in the example illustrated in FIG. 12, the received powers on OFDM symbol#0, OFDM symbol#4, OFDM symbol#7, and OFDM symbol#10 are not taken into account when calculating the SL RSSI.

If it is indicated that the PSCCH of the SL PRS is sent by occupying part of the time-frequency resources among the SL PRS time domain resources, the OFDM symbol occupied by the PSCCH may not be included in the calculation of the SL RSSI.

The CBR on the resource used for the PSCCH may be calculated separately, for example, the CBR is defined as a ratio of the PSCCH resources, whose SL RSSI is higher than a specific threshold, in the SL PRS resource pool among all the resources used for the PSCCH, the SL RSSI may be defined as a received power measured on one PSCCH resource, and one PSCCH resource may be one or more specific PRBs on a specific OFDM symbol in the SL PRS time domain resource.

Optionally, the first resource corresponds to a time-frequency resource composed of one RE offset, one subchannel, and one OFDM symbol, and the first parameter is a received power measured on the RE occupied by the SL PRS in one subchannel on the OFDM symbol.

Since the SL PRS may adopt a comb structure, different RE offsets may be used by different UEs, the number of OFDM symbols included in the SL PRS time domain resources configured in the resource pool may be different, and the bandwidth occupied by the SL PRS may be less than the bandwidth of the resource pool. In order to reflect the resource occupation in the resource pool more accurately, the CBR calculation method may be a ratio of {RE offset, sub-channel, OFDM symbol}, whose SL RSSI is higher than the preset threshold, in the resource pool for sending SL PRS within the first time range. The SL RSSI may be the received power measured on the RE occupied by one SL PRS in one subchannel on one OFDM symbol.

Since the receiving UE needs to perform AGC adjustment on the first OFDM symbol of each SL PRS time domain resource, the received power on the first OFDM symbol in each SL PRS time domain resource is not included in the calculation of the SL RSSI. For example, in the example illustrated in FIG. 12, the received powers on OFDM symbol#0, OFDM symbol#4, OFDM symbol#7, and OFDM symbol#10 are not taken into account when calculating the SL RSSI.

If it is indicated that the PSCCH of the SL PRS is sent by occupying part of the time-frequency resources among the SL PRS time domain resources, the OFDM symbol occupied by the PSCCH may not be included in the calculation of the SL RSSI.

The CBR on the resource used for the PSCCH may be calculated separately, for example, the CBR is defined as a ratio of the PSCCH resources, whose SL RSSI is higher than a preset threshold, in the SL PRS resource pool among all the resources used for the PSCCH, the SL RSSI may be defined as s received power measured on one PSCCH resource, and one PSCCH resource may be one or more specific PRBs on a specific OFDM symbol in the SL PRS time domain resource.

Optionally, the second resource corresponds to a time-frequency resource composed of one subchannel and one OFDM symbol.

Since the bandwidth occupied by the SL PRS sent by the UE may be less than the bandwidth of the SL PRS resource pool, and although the UE only occupies a part of the RE in the bandwidth, there is in-band leakage interference between different UEs, and usually different UEs cannot be multiplexed by frequency division, CR may be defined as a ratio of a number of {subchannels, OFDM symbols} occupied by the UE within the first time range to a total number of {subchannels, OFDM symbols} belonging to the SL PRS resource pool in the second time range. If different UEs are allowed to be multiplexed by frequency division in some cases, CR may be defined as a ratio of a number of {subchannels, OFDM symbols} occupied by the UE within the second time range divided by M to the total number of {subchannels, OFDM symbols} belonging to the SL PRS resource pool in the second time range, the subchannel is the minimum frequency domain resource configured or preconfigured in the resource pool. M is the number of RE offsets allowed in the resource pool, the value range of the RE offsets is 0, 1, ..., the comb size - 1. The RE offset may represent the interval between the RE occupied by the SL PRS and the RB starting point on the first OFDM symbol for sending SL PRS. For example, in Fig. 10, the RE offset is 0, while in the example given in Fig. 11, the RE offset is 2. The allowed RE offset within the resource pool may be configured by network configuration or preconfigured, or defined by communication standards.

Optionally, the second resource corresponds to a time-frequency resource composed of one resource element RE offset, one subchannel, and one SL PRS time domain resource, and the SL PRS time domain resource includes multiple OFDM symbols occupied when one SL PRS is sent.

The CR may define a ratio of a number of {RE offsets, subchannels, SL PRS time domain resources} occupied by the UE within the second time range to a total number of {RE offsets, subchannels, SL PRS time domain resources} belonging to the SL PRS resource pool in the second time range. The subchannel is a minimum frequency domain resource, configured or preconfigured in the resource pool, for sending SL PRS, and the SL PRS time domain resource may multiple OFDM symbols occupied for sending one SL PRS. As illustrated in FIG. 12, the multiple OFDM symbols included in the SL PRS time domain resource may be located in the same slot, and the multiple OFDM symbols included in the SL PRS time domain resource may be continuous or discontinuous.

In some embodiments, the SL PRS and sidelink communication may share a resource pool.

Optionally, the first resource corresponds to a time-frequency resource composed of one subchannel and one OFDM symbol, and the first parameter is a received power measured in one subchannel on one OFDM symbol for sending SL PRS in the SL PRS resource pool.

In the present embodiment, the SL PRS and the sidelink communication may use the same resource pool, and the minimum bandwidth in the frequency domain occupied by the sidelink communication is a subchannel, so the SL RSSI measured by the UE may be different on different subchannels. However, if the SL PRS only occupies a part of the OFDM symbols in the slot, the SL RSSI measured by the UE may also be different on different OFDM symbols. In order to reflect the channel occupancy situation in the resource pool as accurately as possible, the CBR may be defined as a ratio of {subchannel, OFDM symbol}, whose SL RSSI is higher than a preset threshold in the first time range, in the resource pool for sending SL PRS, and the SL RSSI may be a received power measured on one subchannel in one OFDM symbol for sending SL PRS in the resource pool.

Since the receiving UE needs to perform AGC adjustment on the first OFDM symbol of each SL PRS time domain resource, the received power on the first OFDM symbol in each SL PRS time domain resource is not included in the calculation of the SL RSSI. For example, in the example illustrated in FIG. 12, the received powers on OFDM symbol#0, OFDM symbol#4, OFDM symbol#7, and OFDM symbol#10 are not taken into account when calculating the SL RSSI.

The above-described embodiment is suitable for a shared resource pool of SL PRS and SL communication, and can simultaneously reflect the occupation of resources by SL PRS transmission and SL communication.

Optionally, the first resource is a subchannel, and the CBR is a ratio of subchannels, whose first parameter is higher than a preset threshold, in the SL PRS resource pool to a total number of subchannels in the SL PRS resource pool within the first time range.

If the SL PRS and the SL communication are in the same resource pool, the SL PRS may always occupy all the OFDM symbols available for sending SL in the slot. In this case, the CBR may be defined as a ratio of subchannels, whose SL RSSI is higher than the configuration threshold, within the first time range to the total number of subchannels in the resource pool, the first time range is the measurement window [n - c, n - 1], equal to 100 or 100 · 2*^{µ}* slots.

The above-described embodiment is suitable for a shared resource pool of SL PRS and SL communication, and the measurement method of CBR is the same as that of SL communication, which is beneficial to reduce UE implementation complexity to the greatest extent possible.

Optionally, the CR may be a ratio of a number of subchannels that have been used for sending data in a third time range and a number of subchannels included in a sidelink grant that have been obtained in a fourth time range to a total number of subchannels belonging to the SL PRS resource pool in the third time range and the fourth time range. The third time range may be [n - *a, n* - 1], the fourth time range may be [*n, n + b*], *a* is a positive integer, *b* is 0 or a positive integer, the values of *a* and *b* are determined by the UE, but the following three conditions need to be met:
1) $a + b + 1 = 1000$ or 1000 - 2*^{µ}* slots;
2) $b < \left(a+b+1\right) / 2 ;$ and
*3) n + b* does not exceed the last retransmission of the current transmission as indicated by the sidelink grant.

The above-described embodiment is suitable for a shared resource pool of SL PRS and SL communication, and the measurement method of CR is the same as that of SL communication, which is beneficial to reduce UE implementation complexity to the greatest extent possible.

At S920, the terminal device sends the SL PRS according to the parameter corresponding to the SL PRS.

In the embodiment of the present disclosure, the terminal device determines the parameter corresponding to the SL PRS according to the CBR and/or the CR, and sends the SL PRS according to the parameter corresponding to the SL PRS, thereby performing congestion control on the SL PRS and reducing the congestion degree of the system and improving positioning accuracy.

Hereinafter, embodiments of the method of the present disclosure are described in detail with reference to FIG. 1 to FIG. 12, and embodiments of the device of the present disclosure are described in detail with reference to FIG. 13 and FIG. 14. It should be understood that the description of the method embodiment and the description of the device embodiment correspond to each other, and therefore, the portions not described in detail can be referred to the foregoing method embodiments.

FIG. 13 is a schematic structural diagram of a communication device according to an embodiment of the present disclosure. The communication device 1300 in FIG. 13 includes a determination unit 1310 and a sending unit 1320, as follows.

The determining unit 1310 is configured to determine a parameter corresponding to a SL PRS according to a CBR and/or a CR;

The sending unit 1320 is configured to send the SL PRS according to the parameter corresponding to the SL PRS.

Optionally, the parameter corresponding to the SL PRS comprises one or more of the following:
a maximum transmission power, a bandwidth range, a maximum number of transmissions, a minimum transmission period, a minimum comb size and a threshold corresponding to the CR.

Optionally, the CBR is a ratio of first resources, whose first parameter is higher than a preset threshold, in a SL PRS resource pool within a first time range.

Optionally, the CR is a ratio of a number of second resources occupied by the device within a second time range to a total number of the second resources belonging to the SL PRS resource pool in the second time range; or the CR is a ratio of the number of the second resources occupied by the device within the second time range divided by M to the total number of the second resources belonging to the SL PRS resource pool in the second time range, and M is a number of RE offsets allowed in the SL PRS resource pool.

Optionally, the first resource is a SL PRS time domain resource, and the first parameter is a linear average value of received powers measured on multiple OFDM symbols included in one SL PRS time domain resource for sending SL PRS in the SL PRS resource pool; or the first resource is an OFDM symbol, and the first parameter is a received power measured on one OFDM symbol for sending SL PRS in the SL PRS resource pool.

Optionally, the first resource corresponds to a time-frequency resource composed of one RE offset and one SL PRS time domain resource, and the first parameter is a linear average value of received powers measured on a RE occupied by the SL PRS on OFDM symbols included in the SL PRS time domain resource.

Optionally, the first resource corresponds to a time-frequency resource composed of one RE offset and one OFDM symbol, and the first parameter is a received power measured on a RE occupied by the SL PRS on the OFDM symbol.

Optionally, the second resource is an OFDM symbol.

Optionally, the second resource corresponds to a time-frequency resource composed of one RE offset and one SL PRS time domain resource, and the SL PRS time domain resource includes multiple OFDM symbols occupied when one SL PRS is sent.

Optionally, the bandwidth of the SL PRS sent by the device is equal to the bandwidth of the SL PRS resource pool.

Optionally, the first resource corresponds to a time-frequency resource composed of one subchannel and one SL PRS time domain resource, and the first parameter is a linear average value of received powers measured in one subchannel on multiple OFDM symbols included in one SL PRS time domain resource for sending SL PRS in the SL PRS resource pool; or the first resource corresponds to a time-frequency resource composed of one subchannel and one OFDM symbol, and the first parameter is a received power measured in one subchannel on one OFDM symbol for sending SL PRS in the SL PRS resource pool.

Optionally, the first resource corresponds to a time-frequency resource composed of one RE offset, one subchannel, and one SL PRS time domain resource, and the first parameter is a linear average value of received powers measured on a RE occupied by the SL PRS in one subchannel on OFDM symbols included in the SL PRS time domain resource.

Optionally, the first resource corresponds to a time-frequency resource composed of one RE offset, one subchannel, and one OFDM symbol, and the first parameter is a received power measured on a RE occupied by the SL PRS in one subchannel on the OFDM symbol.

Optionally, the second resource corresponds to a time-frequency resource composed of one subchannel and one OFDM symbol.

Optionally, the second resource corresponds to a time-frequency resource composed of one RE offset, one subchannel, and one SL PRS time domain resource, and the SL PRS time domain resource includes multiple OFDM symbols occupied when one SL PRS is sent.

Optionally, the bandwidth of the SL PRS sent by the device is less than the bandwidth of the SL PRS resource pool.

Optionally, the first resource corresponds to a time-frequency resource composed of one subchannel and one OFDM symbol, and the first parameter is a received power measured in one subchannel on one OFDM symbol for sending SL PRS in the SL PRS resource pool.

Optionally, the first resource is a subchannel, and the CBR is a ratio of subchannels, whose first parameter is higher than a preset threshold, in the SL PRS resource pool within the first time range to a total number of subchannels in the SL PRS resource pool.

Optionally, the CR is a ratio of a number of subchannels that have been used for sending data in a third time range and a number of subchannels included in a sidelink grant that have been obtained in a fourth time range to a total number of subchannels belonging to the SL PRS resource pool in the third time range and the fourth time range.

Optionally, the SL PRS and sidelink communication share a resource pool.

Optionally, the first parameter is a SL RSSI.

FIG. 14 is a schematic structural diagram of a device according to an embodiment of the present disclosure. The dashed line in FIG. 14 indicates that the unit or module is optional. The device 1400 may be used to implement the methods described in the method embodiments described above. The device 1400 may be a chip or a communication device.

The device 1400 may include one or more processors 1410. The processor 1410 may support the device 1400 to implement the methods described in the previous method embodiments. The processor 1410 may be a general-purpose processor or a special-purpose processor. For example, the processor may be a central processing unit (CPU). Alternatively, the processor may also be another general purpose processor, a digital signal processor (DSP), an application specific integrated circuit (ASIC), a field programmable gate array (FPGA) or other programmable logic device, a discrete gate or transistor logic device, a discrete hardware component, or the like. The general purpose processor may be a microprocessor or the processor may be any conventional processor or the like.

The device 1400 may also include one or more memories 1420. The memory 1420 has stored a program that can be called by the processor 1410 to cause the processor 1410 to perform the method described in the above method embodiments. The memory 1420 may be independent of the processor 1410 or may be integrated in the processor 1410.

The device 1400 may also include a transceiver 1430. The processor 1410 may communicate with other devices or chips through the transceiver 1430. For example, the processor 1410 may send and receive data with other devices or chips through the transceiver 1430.

The embodiment of the present disclosure also provides a computer-readable storage medium for storing a program. The computer-readable storage medium can be applied to the communication device provided by the embodiment of the present disclosure, and the program causes a computer to execute the method executed by the communication device in each embodiment of the present disclosure.

The embodiments of the present disclosure also provide a computer program product. The computer program product includes a program. The computer program product can be applied to the communication device provided by the embodiment of the present disclosure, and the program causes the computer to execute the method executed by the communication device in each embodiment of the present disclosure.

The embodiments of the present disclosure also provide a computer program. The computer program can be applied to the communication device provided in the embodiment of the present disclosure, and the computer program causes a computer to execute the method executed by the communication device in each embodiment of the present disclosure.

It should be understood that in embodiments of the present disclosure, "B corresponding to A" means that B is associated with A, and B can be determined from A. However, it should also be understood that determining B from A does not mean that B is determined from A alone, and that B may also be determined from A and/or other information.

It should be understood that the term "and/or" herein is merely an association relationship describing an association object, and means that there may be three relationships, for example, A and/or B may mean that A alone exists, A and B simultaneously exist, and B alone exists. In addition, the character "/" herein generally indicates that the associated objects before and after are in an "or" relationship.

It should be understood that in various method embodiments of the present disclosure, the size of the serial numbers of the above-described processes does not mean an execution sequence, and the execution sequence of the processes should be determined by the function and internal logic thereof, and should not constitute any limitation on the implementation of the embodiments of the present disclosure.

In several embodiments provided herein, it should be understood that the disclosed systems, apparatuses, and methods may be implemented in other ways. For example, the device embodiments described above are merely schematic, for example, the division of units is only one logical function division, and there may be other division manners in actual implementation. For example, multiple units or components may be combined or integrated into another system, or some features may be ignored or not implemented. In addition, the coupling or direct coupling or communication connection illustrated or discussed may be an indirect coupling or communication connection through some interface, device or unit, which may be electrical, mechanical or otherwise.

The units described as separate units may or may not be physically separate, and the units displayed as units may or may not be physical units, that is, the units may be located at the same place or may be distributed over multiple network units. Some or all of the units may be selected according to actual needs to achieve the purpose of the solution of the present embodiment.

In addition, all functional units in each embodiment of the present disclosure may be integrated in one processing unit, or each function unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server or data center by wired (e.g. coaxial cable, optical fiber, digital subscriber line (DSL)) or wireless (e.g. infrared, wireless, microwave, etc.) means to another website site, computer, server or data center. The computer-readable storage medium may be any available medium that can be read by a computer or a data storage device such as a server, a data center, or the like that incorporates one or more available media integrations. The available media may be magnetic media (e.g., floppy disk, hard disk, magnetic tape), optical media (e.g., digital video disc (DVD)), or semiconductor media (e.g., solid state disk (SSD)), etc.

The scope of protection of the invention is limited by the appended claims.

## Claims

1. A communication method, implemented by a terminal device, the method comprises:
determining (S910), by the terminal device, a parameter corresponding to a sidelink positioning reference signal, SL PRS, according to a correspondence between a channel busy ratio, CBR, and/or a channel occupancy ratio, CR and the parameter corresponding to the SL PRS, wherein the parameter corresponding to the SL PRS comprises one or more of the following: a bandwidth range and a maximum number of transmissions; and
sending (S920), by the terminal device, the SL PRS according to the parameter corresponding to the SL PRS.

2. The method of claim 1, wherein the CBR is a ratio of first resources, whose first parameter is higher than a preset threshold, in a SL PRS resource pool within a first time range.

3. The method of any one of claims 1 to 2, wherein the CR is a ratio of a number of second resources occupied by the terminal device within a second time range to a total number of the second resources belonging to the SL PRS resource pool in the second time range; or the CR is a ratio of the number of the second resources occupied by the terminal device within the second time range divided by M to the total number of the second resources belonging to the SL PRS resource pool in the second time range, and M is a number of resource element, RE, offsets allowed in the SL PRS resource pool.

4. The method of claim 2, wherein the first resource corresponds to a time-frequency resource composed of one resource element, RE, offset and one SL PRS time domain resource, and the first parameter is a linear average value of received powers measured on a RE occupied by the SL PRS on orthogonal frequency division multiplexing, OFDM, symbols comprised in the SL PRS time domain resource.

5. The method of claim 3, wherein the second resource corresponds to a time-frequency resource composed of one RE offset and one SL PRS time domain resource, and the SL PRS time domain resource comprises a plurality of orthogonal frequency division multiplexing, OFDM, symbols occupied when one SL PRS is sent.

6. The method of any one of claims 3 to 5, wherein a bandwidth of the SL PRS sent by the terminal device is equal to a bandwidth of the SL PRS resource pool.

7. The method of any one of claims 3 to 6, wherein the first parameter is a sidelink received signal strength indicator, SL RSSI.

8. A communication device, comprising:
a determining unit (1310), configured to determine a parameter corresponding to a sidelink positioning reference signal, SL PRS, according to a correspondence between a channel busy ratio, CBR, and/or a channel occupancy ratio, CR and the parameter corresponding to the SL PRS, wherein the parameter corresponding to the SL PRS comprises one or more of the following: a bandwidth range and a maximum number of transmissions; and
a sending unit (1320), configured to send the SL PRS according to the parameter corresponding to the SL PRS.

9. The device of claim 8, wherein the CBR is a ratio of first resources, whose first parameter is higher than a preset threshold, in a SL PRS resource pool within a first time range.

10. The device of any one of claims 8 to 9, wherein the CR is a ratio of a number of second resources occupied by the device within a second time range to a total number of the second resources belonging to the SL PRS resource pool in the second time range; or the CR is a ratio of the number of the second resources occupied by the device within the second time range divided by M to the total number of the second resources belonging to the SL PRS resource pool in the second time range, and M is a number of resource element, RE, offsets allowed in the SL PRS resource pool.

11. The device of claim 9, wherein the first resource corresponds to a time-frequency resource composed of one resource element, RE, offset and one SL PRS time domain resource, and the first parameter is a linear average value of received powers measured on a RE occupied by the SL PRS on orthogonal frequency division multiplexing, OFDM, symbols comprised in the SL PRS time domain resource.

12. The device of claim 10, wherein the second resource corresponds to a time-frequency resource composed of one RE offset and one SL PRS time domain resource, and the SL PRS time domain resource comprises a plurality of orthogonal frequency division multiplexing, OFDM, symbols occupied when one SL PRS is sent.

13. The device of any one of claims 10 to 12, wherein a bandwidth of the SL PRS sent by the device is equal to a bandwidth of the SL PRS resource pool.

## Patentansprüche

1. Kommunikationsverfahren, das durch ein Endgerät implementiert wird, wobei das Verfahren Folgendes umfasst: Bestimmen (S910), durch das Endgerät, eines Parameters, der einem Sidelink-Positionierungsreferenzsignal, SL-PRS, entspricht, gemäß einer Entsprechung zwischen einem Kanalbesetztverhältnis, CBR, und/oder einem Kanalbelegungsverhältnis, CR, und dem Parameter, der dem SL-PRS entspricht, wobei der Parameter, der dem SL-PRS entspricht, eines oder mehrere der Folgenden umfasst:
einen Bandbreitenbereich und eine maximale Anzahl von Übertragungen; und
Senden (S920), durch das Endgerät, des SL-PRS gemäß dem Parameter, der dem SL-PRS entspricht.

2. Verfahren nach Anspruch 1, wobei das CBR ein Verhältnis von ersten Ressourcen, deren erster Parameter höher als ein voreingestellter Schwellenwert ist, in einem SL-PRS-Ressourcenpool innerhalb eines ersten Zeitbereichs ist.

3. Verfahren nach einem der Ansprüche 1 bis 2, wobei das CR ein Verhältnis einer Anzahl von zweiten Ressourcen, die durch das Endgerät innerhalb eines zweiten Zeitbereichs belegt werden, zu einer Gesamtanzahl der zweiten Ressourcen ist, die in dem zweiten Zeitbereich zu dem SL-PRS-Ressourcenpool gehören; oder das CR ein Verhältnis der Anzahl der zweiten Ressourcen, die durch das Endgerät innerhalb des zweiten Zeitbereichs belegt werden, geteilt durch M, zur Gesamtanzahl der zweiten Ressourcen ist, die in dem zweiten Zeitbereich zu dem SL-PRS-Ressourcenpool gehören, und M eine Anzahl von Ressourcenelement-, RE-, Versätzen ist, die in dem SL-PRS-Ressourcenpool zulässig ist.

4. Verfahren nach Anspruch 2, wobei die erste Ressource einer Zeit-Frequenz-Ressource entspricht, die aus einem Ressourcenelement-, RE-, Versatz und einer SL-PRS-Zeitdomänenressource besteht, und der erste Parameter ein linearer Durchschnittswert von Empfangsleistungen ist, die an einem RE gemessen werden, das durch das SL-PRS auf orthogonalen Frequenzmultiplex-, OFDM-, Symbolen belegt wird, die in der SL-PRS-Zeitdomänenressource enthalten sind.

5. Verfahren nach Anspruch 3, wobei die zweite Ressource einer Zeit-Frequenz-Ressource entspricht, die aus einem RE-Versatz und einer SL-PRS-Zeitdomänenressource besteht, und die SL-PRS-Zeitdomänenressource mehrere orthogonale Frequenzmultiplex-, OFDM-, Symbole umfasst, die belegt werden, wenn ein SL-PRS gesendet wird.

6. Verfahren nach einem der Ansprüche 3 bis 5, wobei eine Bandbreite des durch das Endgerät gesendeten SL-PRS gleich einer Bandbreite des SL-PRS-Ressourcenpools ist.

7. Verfahren nach einem der Ansprüche 3 bis 6, wobei der erste Parameter ein Sidelink-Empfangssignalstärkeindikator, SL-RSSI, ist.

8. Kommunikationsgerät, umfassend:
eine Bestimmungseinheit (1310), die dazu konfiguriert ist, einen Parameter, der einem Sidelink-Positionierungsreferenzsignal, SL-PRS, entspricht, gemäß einer Entsprechung zwischen einem Kanalbesetztverhältnis, CBR, und/oder einem Kanalbelegungsverhältnis, CR, und dem Parameter, der dem SL-PRS entspricht, zu bestimmen, wobei der Parameter, der dem SL-PRS entspricht, eines oder mehrere der Folgenden umfasst: einen Bandbreitenbereich und eine maximale Anzahl von Übertragungen; und
eine Sendeeinheit (1320), die dazu konfiguriert ist, das SL-PRS gemäß dem Parameter, der dem SL-PRS entspricht, zu senden.

9. Gerät nach Anspruch 8, wobei das CBR ein Verhältnis von ersten Ressourcen, deren erster Parameter höher als ein voreingestellter Schwellenwert ist, in einem SL-PRS-Ressourcenpool innerhalb eines ersten Zeitbereichs ist.

10. Gerät nach einem der Ansprüche 8 bis 9, wobei das CR ein Verhältnis einer Anzahl von zweiten Ressourcen, die durch das Gerät innerhalb eines zweiten Zeitbereichs belegt werden, zu einer Gesamtanzahl der zweiten Ressourcen ist, die in dem zweiten Zeitbereich zu dem SL-PRS-Ressourcenpool gehören; oder das CR ein Verhältnis der Anzahl der zweiten Ressourcen, die durch das Gerät innerhalb des zweiten Zeitbereichs belegt werden, geteilt durch M, zur Gesamtanzahl der zweiten Ressourcen ist, die in dem zweiten Zeitbereich zu dem SL-PRS-Ressourcenpool gehören, und M eine Anzahl von Ressourcenelement-, RE-, Versätzen ist, die in dem SL-PRS-Ressourcenpool zulässig ist.

11. Gerät nach Anspruch 9, wobei die erste Ressource einer Zeit-Frequenz-Ressource entspricht, die aus einem Ressourcenelement-, RE-, Versatz und einer SL-PRS-Zeitdomänenressource besteht, und der erste Parameter ein linearer Durchschnittswert von Empfangsleistungen ist, die an einem RE gemessen werden, das durch das SL-PRS auf orthogonalen Frequenzmultiplex-, OFDM-, Symbolen belegt wird, die in der SL-PRS-Zeitdomänenressource enthalten sind.

12. Gerät nach Anspruch 10, wobei die zweite Ressource einer Zeit-Frequenz-Ressource entspricht, die aus einem RE-Versatz und einer SL-PRS-Zeitdomänenressource besteht, und die SL-PRS-Zeitdomänenressource mehrere orthogonale Frequenzmultiplex-, OFDM-, Symbole umfasst, die belegt werden, wenn ein SL-PRS gesendet wird.

13. Gerät nach einem der Ansprüche 10 bis 12, wobei eine Bandbreite des durch das Gerät gesendeten SL-PRS gleich einer Bandbreite des SL-PRS-Ressourcenpools ist.

## Revendications

1. Procédé de communication, mis en œuvre par un dispositif de terminal, le procédé comprend :
la détermination (S910), par le dispositif de terminal, d'un paramètre correspondant à un signal de référence de positionnement de liaison latérale, SideLink Positioning Reference Signal SL PRS, selon une correspondance entre un rapport d'état occupé de canal, Channel Busy Ratio CBR, et/ou un rapport d'occupation de canal, Channel occupancy Ratio CR, et le paramètre correspondant au SL PRS, dans lequel le paramètre correspondant au SL PRS comprend un ou plusieurs éléments parmi les suivants :
un intervalle de largeur de bande et un nombre maximum de transmissions ; et
l'envoi (S920), par le dispositif de terminal, du SL PRS selon le paramètre correspondant au SL PRS.

2. Procédé de la revendication 1, dans lequel le CBR est un rapport de premières ressources, dont le premier paramètre est plus élevé qu'un seuil prédéfini, dans une réserve de ressources de SL PRS dans les limites d'un premier intervalle de temps.

3. Procédé de l'une quelconque des revendications 1 et 2, dans lequel le CR est un rapport d'un nombre de secondes ressources occupées par le dispositif de terminal dans les limites d'un second intervalle de temps relativement à un nombre total des secondes ressources appartenant à la réserve de ressources de SL PRS dans le second intervalle de temps ; ou le CR est un rapport du nombre des secondes ressources occupées par le dispositif de terminal dans les limites du second intervalle de temps divisé par M relativement au nombre total des secondes ressources appartenant à la réserve de ressources de SL PRS dans le second intervalle de temps, et M est un nombre de décalages d'élément de ressource, Resource Element RE, permis dans la réserve de ressources de SL PRS.

4. Procédé de la revendication 2, dans lequel la première ressource correspond à une ressource de temps-fréquence composée d'un décalage d'élément de ressource, RE, et d'une ressource de domaine de temps de SL PRS, et le premier paramètre est une valeur moyenne linéaire de puissances reçues mesurées sur un RE occupé par le SL PRS sur des symboles de multiplexage par répartition orthogonale de la fréquence, Orthogonal Frequency Division Multiplexing OFDM, compris dans la ressource de domaine de temps de SL PRS.

5. Procédé de la revendication 3, dans lequel la seconde ressource correspond à une ressource de temps-fréquence composée d'un décalage de RE et d'une ressource de domaine de temps de SL PRS, et la ressource de domaine de temps de SL PRS comprend une pluralité de symboles de multiplexage par répartition orthogonale de la fréquence, OFDM, occupés lorsqu'un SL PRS est envoyé.

6. Procédé de l'une quelconque des revendications 3 à 5, dans lequel une largeur de bande du SL PRS envoyé par le dispositif de terminal est égale à une largeur de bande de la réserve de ressources de SL PRS.

7. Procédé de l'une quelconque des revendications 3 à 6, dans lequel le premier paramètre est un indicateur d'intensité de signal reçu de liaison latérale, SideLink Received Signal Strength Indicator SL RSSI.

8. Dispositif de communication, comprenant :
une unité de détermination (1310), configurée pour déterminer un paramètre correspondant à un signal de référence de positionnement de liaison latérale, SideLink Positioning Reference Signal SL PRS, selon une correspondance entre un rapport d'état occupé de canal, Channel Busy Ratio CBR, et/ou un rapport d'occupation de canal, Channel occupancy Ratio CR, et le paramètre correspondant au SL PRS, dans lequel le paramètre correspondant au SL PRS comprend un ou plusieurs éléments parmi les suivants : un intervalle de largeur de bande et un nombre maximum de transmissions ; et
une unité d'envoi (1320), configurée pour envoyer le SL PRS selon le paramètre correspondant au SL PRS.

9. Dispositif de la revendication 8, dans lequel le CBR est un rapport de premières ressources, dont le premier paramètre est plus élevé qu'un seuil prédéfini, dans une réserve de ressources de SL PRS dans les limites d'un premier intervalle de temps.

10. Dispositif de l'une quelconque des revendications 8 et 9, dans lequel le CR est un rapport d'un nombre de secondes ressources occupées par le dispositif dans les limites d'un second intervalle de temps relativement à un nombre total des secondes ressources appartenant à la réserve de ressources de SL PRS dans le second intervalle de temps ; ou le CR est un rapport du nombre des secondes ressources occupées par le dispositif dans les limites du second intervalle de temps divisé par M relativement au nombre total des secondes ressources appartenant à la réserve de ressources de SL PRS dans le second intervalle de temps, et M est un nombre de décalages d'élément de ressource, Resource Element RE, permis dans la réserve de ressources de SL PRS.

11. Dispositif de la revendication 9, dans lequel la première ressource correspond à une ressource de temps-fréquence composée d'un décalage d'élément de ressource, RE, et d'une ressource de domaine de temps de SL PRS, et le premier paramètre est une valeur moyenne linéaire de puissances reçues mesurées sur un RE occupé par le SL PRS sur des symboles de multiplexage par répartition orthogonale de la fréquence, Orthogonal Frequency Division Multiplexing OFDM, compris dans la ressource de domaine de temps de SL PRS.

12. Dispositif de la revendication 10, dans lequel la seconde ressource correspond à une ressource de temps-fréquence composée d'un décalage de RE et d'une ressource de domaine de temps de SL PRS, et la ressource de domaine de temps de SL PRS comprend une pluralité de des symboles de multiplexage par répartition orthogonale de la fréquence, OFDM, occupées lorsqu'un SL PRS est envoyé.

13. Dispositif de l'une quelconque des revendications 10 à 12, dans lequel une largeur de bande du SL PRS envoyé par le dispositif est égale à une largeur de bande de la réserve de ressources de SL PRS.
